# EUROPEAN PATENT APPLICATION

(11) **EP 2 372 481 A2**
(43) Date of publication of application: **05.10.2011**
(21) Application number: 11159479.2
(22) Date of filing: 23.03.2011
(51) Int. Cl.: G05B 23/02

(54) **Operational state analysis system and operational state analysis method**

(30) Priority: 29.03.2010 JP 2010074309
(71) Applicant: Yokogawa Electric Corporation, Tokyo 180-8750 (JP)
(72) Inventor: Akimoto, Shinya, Tokyo 180-8750 (JP); Susumago, Mitsutoshi, Tokyo 180-8750 (JP); Sato, Keiji, Tokyo 180-8750 (JP)
(74) Representative: Henkel, Breuer & Partner

(57) **Abstract**

The operational state analysis system may analyze an operational state of a plant based on processed data items related to the plant. The operational state analysis system may include a reception unit that receives a selection of the processed data items, the selection being performed by user of the operational state analysis system, a property value acquisition unit that acquires a plurality of property values, each of the plurality of property values being one of values of the processed data items and statistical values based on the processed data items of which the selection is received by the reception unit, and a waveform display unit that displays the plurality of property values acquired by the property value acquisition unit as waveforms that analyzes the operational state.

## Description

### BACKGROUND OF THE INVENTION

### Field of the Invention

The present invention relates to an operational state analysis system and an operation state analysis method, in which an operational state of a plant can be analyzed based on processed data items.

Priority is claimed on Japanese Patent Application No. 2010-074309, filed March 29, 2010, the content of which is incorporated herein by reference.

### Description of the Related Art

All patents, patent applications, patent publications, scientific articles, and the like, which will hereinafter be cited or identified in the present application, will hereby be incorporated by reference in their entirety in order to describe more fully the state of the art to which the present invention pertains.

As one technique of determining an operational state of a plant, there is a method of analyzing the operational state of the plant by using a trend graph or a scatter diagram of processed data items of the plant. For example, while operating the plant, an operator of the plant monitors online a great number of processed data items through a screen display that is controlled by an operational monitoring device, and monitors abnormalities based on the operator's experience or intuition. Also, in the case of making an offline analysis of an abnormality in an operation to improve the plant, plant improvement staff analyze the cause of the abnormality through the trend graph or the scatter diagram by using an offline analysis function of an analysis system.

The operational state of the plant may not only be determined by the existence/nonexistence of abnormalities in respective processed values, but the balance between the processed data items may be an important factor.

In the analytical technique in the related art, it is difficult to confirm the normality/abnormality of a balance between a great number of processed data items on the trend graph. Particularly, in the case where a great number of processed data items that are desirable to observe exist, many lines are too intricate, which makes determination difficult. On the other hand, in the case of using the scatter diagram, the correlation between two processed data items can be grasped. Nevertheless, in order to grasp the balance between a great number of processed data items, the scatter diagram is not helpful.

In the analytical technique in the related art, the balance between a great number of processed data items is impossible to quantify, and therefore determination of normality/abnormality must depend on human intuition. Also, it is impossible to objectively determine which processed data items are to be used in order to determine the plant state, and the selection of the processed data items that are the subject of the monitoring is based on the operator's experience or intuition.

### SUMMARY

The operational state analysis system may analyze an operational state of a plant based on processed data items related to the plant. The operational state analysis system may include a reception unit that receives a selection of the processed data items, the selection being performed by user of the operational state analysis system, a property value acquisition unit that acquires a plurality of property values, each of the plurality of property values being one of values of the processed data items and statistical values based on the processed data items of which the selection is received by the reception unit, and a waveform display unit that displays the plurality of property values acquired by the property value acquisition unit as waveforms that analyzes the operational state.

An operational state analysis system may include a field controller that controls field devices disposed in a plant, a manipulation monitoring device that manipulates and monitors the field controller, a data storage unit that stores processed data items related to the plant, and an analysis terminal device that analyzes an operational state of the plant based on the processed data items related to the plant. The analysis terminal device may include a reception unit that receives a selection of the processed data items, the selection being performed by user of the operational state analysis system, a property value acquisition unit that acquires a plurality of property values, each of the plurality of property values being one of values of the processed data items and statistical values based on the processed data items of which the selection is received by the reception unit, and a waveform display unit that displays the plurality of property values acquired by the property value acquisition unit as waveforms that analyzes the operational state.

An operational state analysis method may analyze the operational state of a plant based on processed data items. The operational state analysis method may include receiving a selection of the processed data items, acquiring a plurality of property values that are one of values of the processed data items and statistical values based on the processed data items of which the selection has been received, and displaying the plurality of property values as waveforms so as to analyze the operational state of the plant.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a block diagram illustrating an example of a configuration of a distributed field control system including an operational state analysis system in accordance with a first preferred embodiment of the present invention;
Fig. 2 is a diagram illustrating an example of waveforms displayed by a waveform display unit of the operational state analysis system in accordance with the first preferred embodiment of the present invention;
FIG. 3 is a diagram illustrating an example of a display screen that indicates a waveform display by the waveform display unit and the results of calculation of contribution of the waveforms;
FIG. 4 is a diagram illustrating an example of a display screen in the case where a feature extraction border is to give a pseudo-waveform and an analysis is performed within the range;
FIG. 5A is a diagram illustrating an example of a display screen in the case where a feature extraction border is to give a pseudo-waveform and an analysis is performed within the range;
FIG. 5B is a diagram illustrating an example of a display screen in the case where a feature extraction border is to give a pseudo-waveform and an analysis is performed within the range;
FIG. 6 is a diagram illustrating an example of an analysis screen that is displayed on a monitor screen during a plant operation; and
FIG. 7 is a diagram illustrating an example of displaying a pseudo-waveform through a cobweb chart.

### DETAILED DESCRIPTION OF THE PREFERRED EMBODIMENTS

The present invention will be now described herein with reference to illustrative embodiments. Those skilled in the art will recognize that many alternative embodiments can be accomplished using the teaching of the present invention and that the present invention is not limited to the embodiments illustrated herein for explanatory purposes.

The operational state analysis system may analyze an operational state of a plant based on processed data items related to the plant. The operational state analysis system may include a reception unit that receives a selection of the processed data items, the selection being performed by user of the operational state analysis system, a property value acquisition unit that acquires a plurality of property values, each of the plurality of property values being one of values of the processed data items and statistical values based on the processed data items of which the selection is received by the reception unit, and a waveform display unit that displays the plurality of property values acquired by the property value acquisition unit as waveforms that analyzes the operational state.

The operational state analysis system may further include an analysis unit that calculates a difference between the waveforms displayed by the waveform display unit as a Mahalanobis' generalized distance.

The analysis unit may calculate a contribution of one of the plurality of property values for the Mahalanobis' generalized distance.

The waveform display unit may display a first waveform that is obtained through the reception unit when the processed data items in a period in which the operational state is normal is given and a second waveform that is obtained through the reception unit when the processed data items in a predetermined period is given in a comparable manner.

The reception unit may receive the selection of the processed data items based on a user's operation on a display screen on which the waveforms are displayed by the waveform display unit.

The processed data items that are given through the reception unit may be stored in advance as historical data.

The processed data items that are given through the reception unit may be current processed data items obtained from the plant.

An operational state analysis system may include a field controller that controls field devices disposed in a plant, a manipulation monitoring device that manipulates and monitors the field controller, a data storage unit that stores processed data items related to the plant, and an analysis terminal device that analyzes an operational state of the plant based on the processed data items related to the plant. The analysis terminal device may include a reception unit that receives a selection of the processed data items, the selection being performed by user of the operational state analysis system, a property value acquisition unit that acquires a plurality of property values, each of the plurality of property values being one of values of the processed data items and statistical values based on the processed data items of which the selection is received by the reception unit, and a waveform display unit that displays the plurality of property values acquired by the property value acquisition unit as waveforms that analyzes the operational state.

The analysis terminal device may further include an analysis unit that calculates a difference between the waveforms displayed by the waveform display unit as a Mahalanobis' generalized distance.

The operational state analysis system may further include a monitor screen on which the waveform display unit displays the waveforms, the reception unit receiving the selection of the processed data items based on a user's operation on the display screen.

The processed data items that are given through the reception unit may be current processed data items obtained from the plant.

An operational state analysis method may analyze the operational state of a plant based on processed data items. The operational state analysis method may include receiving a selection of the processed data items, acquiring a plurality of property values that are one of values of the processed data items and statistical values based on the processed data items of which the selection has been received, and displaying the plurality of property values as waveforms so as to analyze the operational state of the plant.

The operational state analysis method may further include calculating a difference between the waveforms that has been displayed as a Mahalanobis' generalized distance.

The operational state analysis method may further include calculating a contribution of one of the plurality of property values for the Mahalanobis' generalized distance.

The operational state analysis method may further include displaying a first waveform that is obtained when the processed data items in a period in which the operational state is normal is given and a second waveform that is obtained when the processed data items in a predetermined period is given in a comparable manner.

The operational state analysis method may further include receiving the selection of the processed data items based on a user's operation on a display screen on which the waveforms are displayed.

The processed data items may be stored in advance as historical data.

The processed data items may be current processed data items obtained from the plant.

By using an operational state analysis system in accordance with preferred embodiments of the present invention, the balance between a great number of processed data items can be objectively grasped.

By using an operational state analysis system in accordance with preferred embodiments of the present invention, a plurality of property values, which are values of processed data items themselves or statistical values based on the processed data items, are displayed as waveforms for analyzing the operational state of a plant, and thus the balance between a great number of processed data items can be objectively grasped.

Hereinafter, an operational state analysis system in accordance with a first preferred embodiment of the present invention will be described.

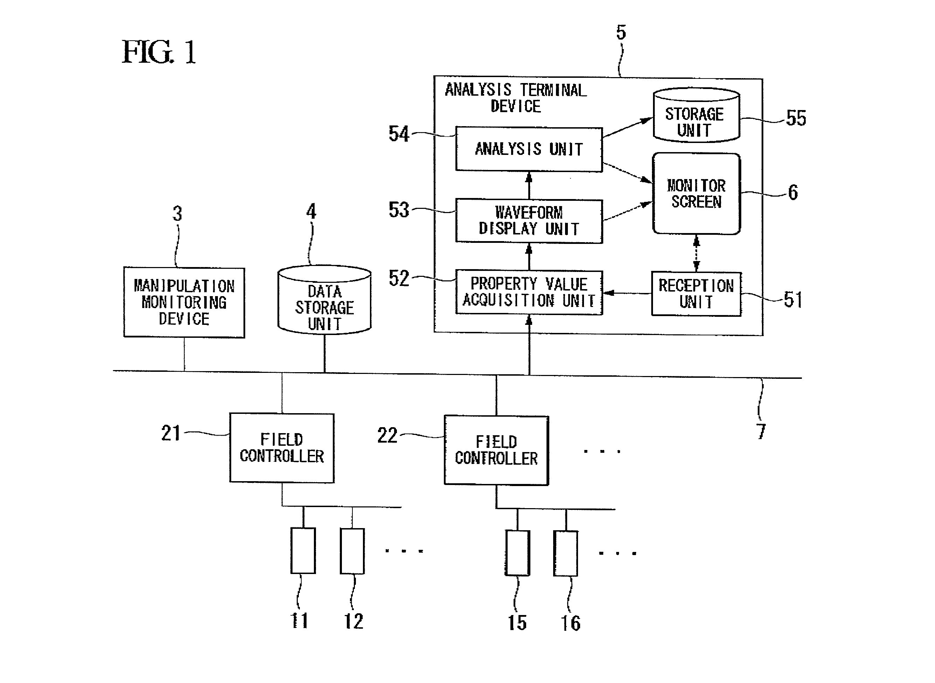

FIG. 1 is a block diagram illustrating an example of a conjugation of a distributed field control system including the operational state analysis system in accordance with the first preferred embodiment of the present invention.

As illustrated in FIG. 1, the field control system includes field controllers 21, 22, ..., an operational monitoring device 3, a data storage unit 4, an analysis terminal device 5, and a communication bus 7. The field controller 21 controls field devices 11, 12, ... that are disposed in a plant. The field controller 22 controls field devices 15, 16, ... that are disposed in the plant. The operational monitoring device 3 performs operation and monitoring of the field controllers 21, 22, ... through the communication bus 7. The data storage unit 4 stores processed data items handled in the field control system as historical data. The analysis terminal device 5 analyzes an operational state of the plant. The field controllers 21, 22, ..., the operational monitoring device 3, the data storage unit 4, and the analysis terminal device 5 are connected together through a communication bus 7.

The analysis terminal device 5 includes a reception unit 51, a property value acquisition unit 52, a waveform display unit 53, an analysis unit 54, and a storage unit 55. The reception unit 51 receives a selection of processed data items. The property value acquisition unit 52 acquires a plurality of property values that are values of the processed data items or statistical values based on the processed data items of which the selection is received by the reception unit 51. The waveform display unit 53 displays the plurality of property values acquired by the property value acquisition unit 52 on a monitor screen 6 as waveforms for analyzing the operational state of the plant. The analysis unit 54 performs analysis based on the waveforms that are displayed by the waveform display unit 53. The storage unit 55 stores the result of the analysis or the like by the analysis unit 54.

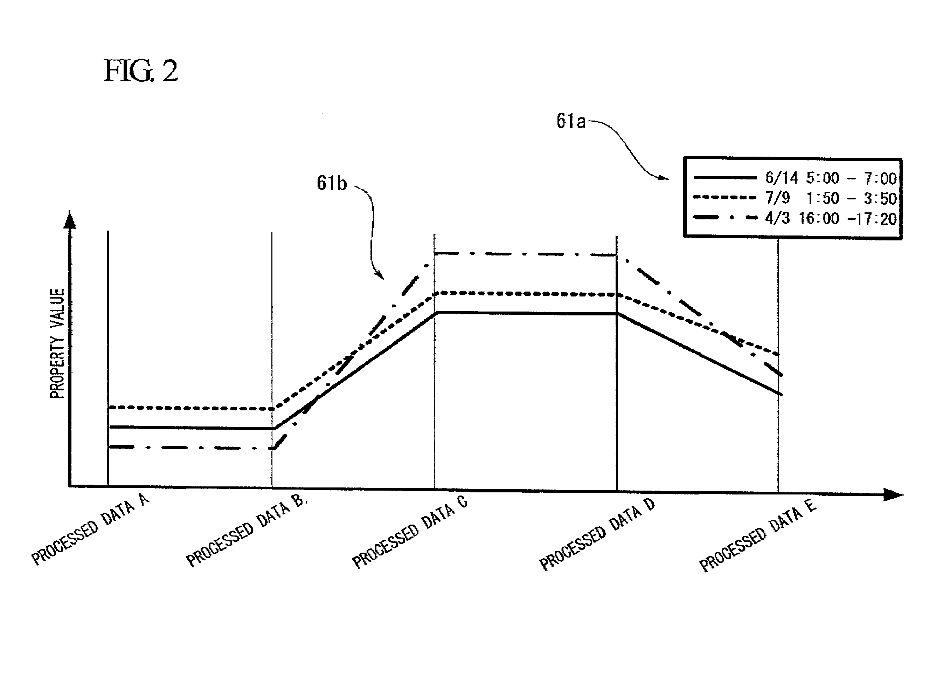

FIG. 2 is a diagram illustrating an example of waveforms that are displayed on the monitor screen 6 by the waveform display unit 53. The horizontal axis of FIG. 2 represents the processed data items A, B, C, D and E. The vertical axis of FIG. 2 represents respective property values of the processed data items. The plotted points are connected by straight lines as a broken line graph.

In the example of FIG. 2, a user selects one of processed data items A, B, C, D, and E of which the balances are desired to be investigated through the reception unit 51. Here, historical data stored in the data storage unit 4 or online data that is handled by the operational monitoring device 3 or the field controller 2 may be selected as the processed data items to be analyzed. The processed data items may be selected in a designated period. As indicated as a region 61a in FIG. 2, in the example of FIG. 2, one of the processed data items A, B, C, D, and E is selected with respect to three different periods, respectively.

Also, the user may determine the arrangement of the respective processed data items through the reception unit 51. In the example of FIG. 2, the respective processed data items A, B, C, D, and E are arranged in the order according to the flow of processes. It may facilitate the analysis in consideration of each process or the order of processes to arrange the process in the order of processed data as described above.

Next, the property value acquisition unit 52 calculates property values of the processed data items. The property value is a value of the processed data item or a statistical value based on the processed data item. The property value includes an instantaneous value, the average value, the maximum value, the minimum value, the standard deviation of the processed data items, and the like. The property value may be freely defined by the user.

The kinds of property values for the respective processed data items, that is, the attributes, may be common or may differ from one another. For example, the average value of the respective processed data items A, B, C, D, and E may be the property value. Also, for example, as the property value, the average value and the maximum value of the processed data items may be mixedly designated. Further, although in the example of FIG. 2, it is exemplified that the processed data items A, B, C, D, and E that become the basis of the property values are all different data, different property values based on the same processed data items may also be designated. For example, the instantaneous value, the average value, the maximum value, and the like, of the processed data item A may be designated as respective independent property values.

Next, as illustrated in FIG. 2, the waveform display unit 53 arranges the processed data items on the horizontal axis, plots the respective property values on the vertical axis, and prepares the broken line graph in which plotted points are connected by straight lines, and displays the graph on the monitor screen 6. This broken line graph indicates the balance between the processed data items to be analyzed as pseudo-waveforms. In the region 61b in FIG. 2, three broken line graphs for the processed data items having different periods are illustrated.

As described above, by indicating the balance between the processed data items as the waveform, it becomes possible to visually grasp the state of the balance between the processed data items. Also, by displaying a plurality of broken line graphs to overlap each other, the balance between the processed data items corresponding to the respective broken line graphs can be easily compared with one another.

In general, distribution analysis is used as one technique of analyzing the balance between the plurality of data. The distribution analysis has the advantages in that the distribution of unevenness of data is visually grasped by a contour diagram or the like. However, the distribution analysis can analyze only the distribution of the same kind of physical amounts. Physical coordinates for indicating the respective data values are required. On the contrary, the balances expressed by the pseudo-waveforms can express the distribution state without being conscious of the difference between the kinds of physical amounts such as temperature, pressure, and flow rate, physical positional coordinates, and the kinds of processed data items such as process values, and manipulative values.

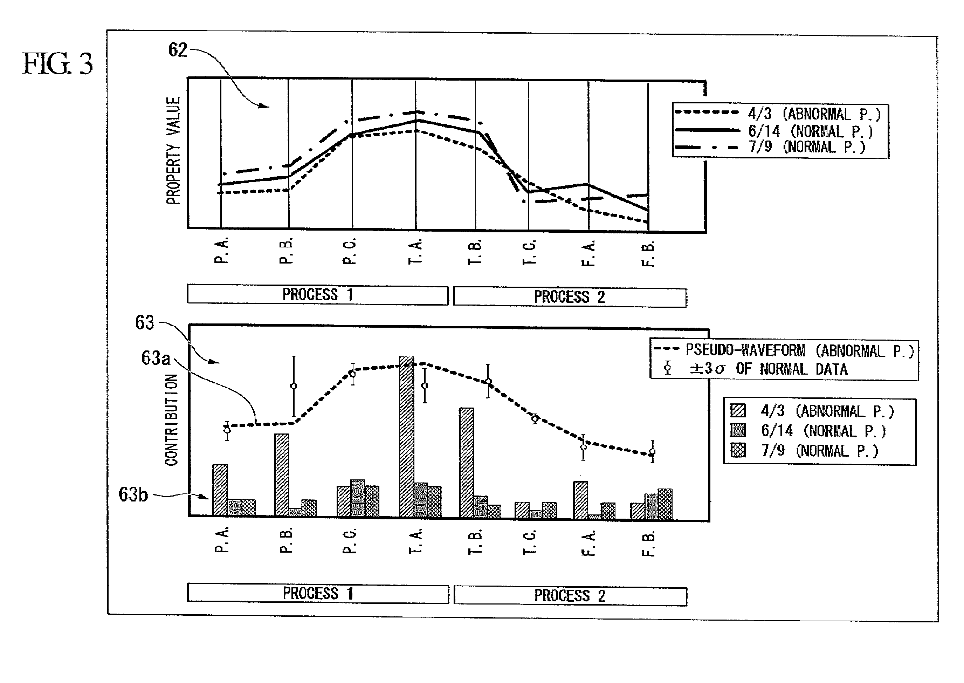

FIG. 3 is a diagram illustrating an example of a display screen that indicates waveform display by the waveform display unit 53 and the results of calculation of contribution of the waveforms. FIG. 3 includes a region 62 that displays the processed value corresponding to each processed data item and a region 63 that displays the contribution of the processed data corresponding to each processed data item.

In the region 62 of FIG. 3, the balance between processed data items is indicated by three broken line graphs as the waveform display by the waveform display unit 53. Also, separately from these broken line graphs, a broken line graph of a pseudo-waveform that indicates an ideal balance may be displayed. This ideal waveform, for example, is determined as a pseudo-waveform that is closest to a pseudo-waveform group that corresponds to a process group which was normal in the past. The pseudo-waveform that indicates the ideal balance may be determined, for example, as a waveform that minimizes the total sum of Mahalanobis' generalized distances, that is, MD values, among pseudo-waveform groups that correspond to the process group which was normal in the past, or an average of pseudo-waveform groups that correspond to the process group which was normal in the past. The MD value is a value calculated using the Mahalanobis and Taguchi method (MT method).

By displaying the pseudo-waveform to be analyzed and the pseudo-waveform that indicates an ideal balance to overlap each other, it can be visually grasped which portion of the waveform the difference between the normality and the abnormality appears in.

The shape of the pseudo-waveform may be adjusted by normalizing the property values. For example, by performing normalization so that the ideal pseudo-waveform becomes a straight line, it becomes easy to uniformly grasp the difference between the respective property values.

Also, in the region 63 of FIG. 3, the result of analysis using the MT method by the analysis unit 54 is displayed. In FIG. 3, "Abnormal P." represents "Abnormal Period." "Normal P." represents "Normal Period." "P. A," represents "Pressure A," "T. A." represents "Temperature A." "F.A." represents "Flow rate A."

The analysis unit 54 applies the MT method to a feature amount of each property value based on the pseudo-waveform by the waveform display unit 53 that is displayed in the region 62. As a result, the difference between the pseudo-waveforms is calculated as the Mahalanobis' distance, that is, the MD value. As the MD value is larger, the difference between the waveforms becomes greater. Also, it is obtained as the contribution that is determined for each property value which makers the difference between the pseudo-waveforms greater. That is, based on the contribution that is determined for each property value, it can be known which property value makes the difference between the pseudo-waveforms greater.

By calculating the difference between the pseudo-waveform to be analyzed and the pseudo-waveform group that corresponds to the process group that was normal in the past as the MD value, the difference can be indicated as an objective numerical value. Also, in the case where the MD value exceeds a threshold value that is set for the MD value, this case is determined to be abnormal, and thus it becomes possible to discriminate between normality and abnormality based on the objective basis. For example, although in the region 62 of FIG. 3, the discrimination between normality and abnormality is made with respect to the respective pseudo-waveforms, the normality/abnormality may be determined based on the MD value between the respective pseudo-waveforms and the pseudo-waveform that indicates an ideal balance.

Also, as illustrated in FIG. 3, in the region 63, the average and the deviation of the pseudo-waveform group that corresponds to the process group which was normal in the past are displayed together with the pseudo-waveform 63a to be analyzed in a period in which abnormality occurs. Also, the contribution of the respective property values for the three pseudo-waveforms is displayed as a bar graph 63b. Because of this, the property value that has a great contribution to the pseudo-waveform can be grasped as an index to be watched in the case where abnormalities occur.

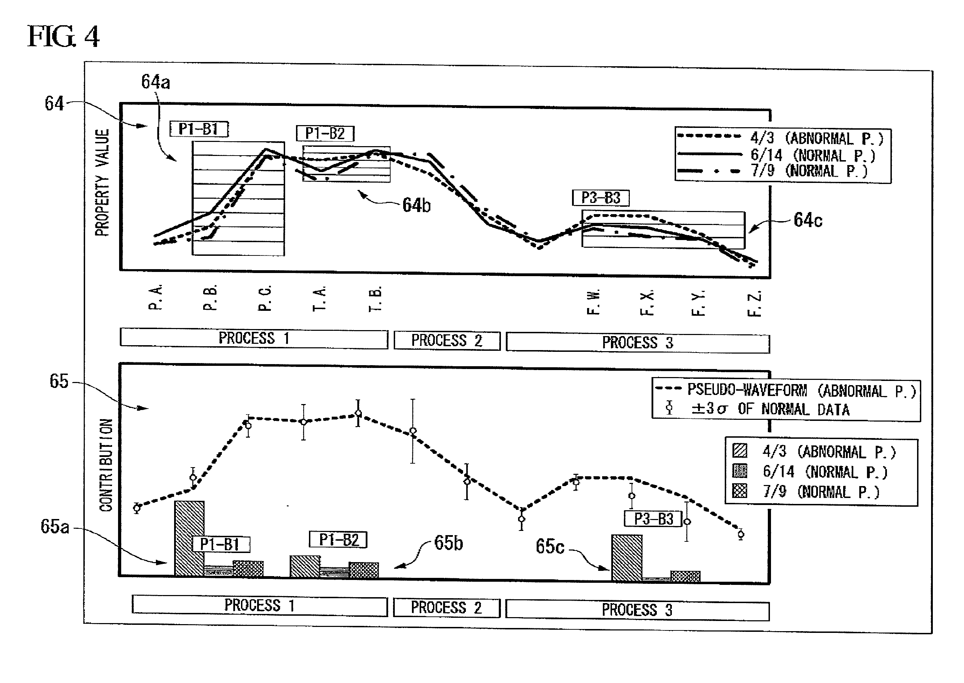

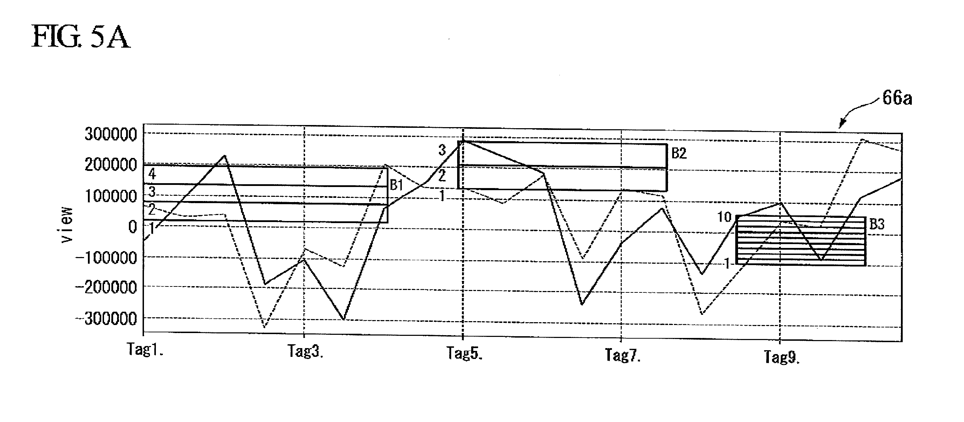

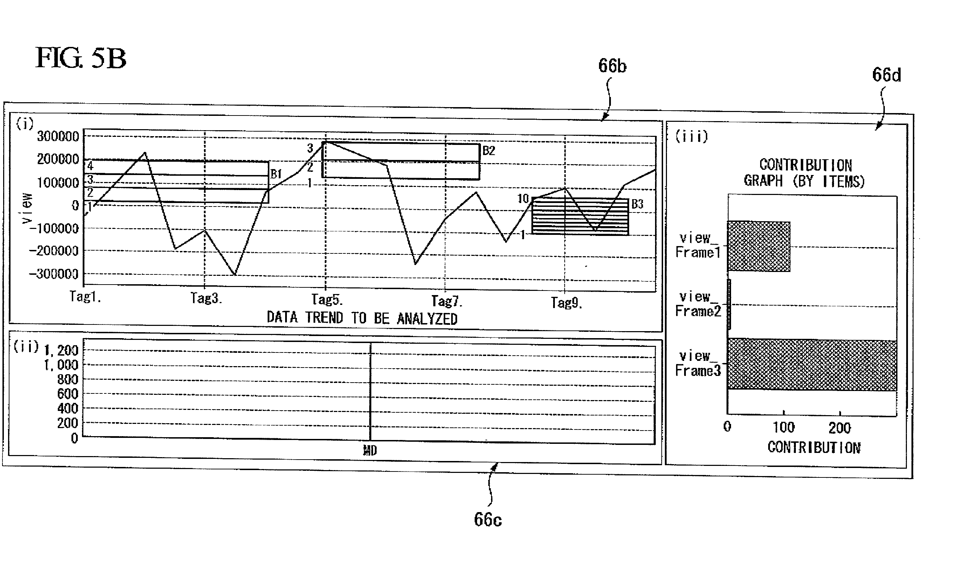

FIGS. 4, 5A and 5B are diagrams illustrating an example of a display screen in the case where a feature extraction border is to give a pseudo-waveform and an analysis is performed within the range.

In a region 64 of FIG. 4, three pseudo-waveforms by the waveform display unit 53 are displayed. Through an operation on the display screen, a user can set the feature extraction border. For example, if an extraction border 64a is set in FIG. 4, the property value acquisition unit 52 acquires the property value in the range that is prescribed by the extraction border 64a, and this property value becomes the subject of analysis in the waveform display unit 53 and the analysis unit 54. That is, a process of receiving the setting of the extraction border 64 on the display screen is performed as the function of the reception unit 51 that receives the selection of the property value to be analyzed or the processed data item. In FIG. 4, "P1-B1" represents "Process 1 - Border 1."

If the extraction border 64a is set in the region 64, the feature amount by a sample line is obtained with respect to the pseudo-waveform in the range of the extraction border 64a by the operation of the analysis unit 54, and the MD value for the normal pseudo-waveform and the contributions to the MD valuer for the respective property values are calculated by applying the MT method. Further, the calculation result of the contributions is displayed as a bar graph 65a in the region 65. In the bar graph 65a, in the same manner as in the bar graph 63b in FIG. 3, the contributions of the respective property values are displayed with respect to the three pseudo-waveforms.

In the same manner, if the extraction border 64b is set in the region 64, the contribution for the respective property values are calculated with respect to the pseudo-waveform in the range of the extraction border 64b, and the calculation result of the contributions is displayed as a bar graph 65b in the region 65. Also, if the extraction border 64c is set in the region 64, the contribution for the respective property values are calculated with respect to the pseudo-waveform in the range of the extraction border 64c, and the calculation result of the contributions is displayed as a bar graph 65c in the region 65.

The setting of the sample line corresponds to the coordinate setting within the extraction border. Also, the feature amount may be set as an arbitrary value. For example, the feature amount may be an average value, the maximum value, the minimum value, the standard deviation, the number of maximum values, the number of minimum values, and the number of inflection points of the numerical values that indicate the pseudo-waveforms within the extraction border, the average value, the maximum value, the minimum value, the standard deviation, the number of maximum values, the number of minimum values, and the number of inflection points of slopes of the pseudo-waveforms within the extraction border, and the like.

The feature amount extraction by the feature extraction border and the sample line is disclosed in Japanese Unexamined Patent Application, First Publications Nos. 2007-298525, 2007-267474, and 2007-227279.

In the example of FIG. 5A, two pseudo-waveforms prepared by the waveform display unit 53 are displayed in a region 66a. Accordingly, balances of the two waveforms can be compared with eyes. Also, in the region 66a, the setting of the feature extraction border is received and displayed. The number of the pseudo-waveforms displayed on the region 66a is not limited to two, but may be an arbitrary number.

In a region 66b of FIG. 5B, a pseudo-waveform selected as the subject of analysis among pseudo-waveforms displayed in the region 66a is displayed. In the region 66b, the extraction border which is as set in the region 66a may be displayed.

Also, in a region 66c of FIG. 5B, the MD values between the normal pseudo-waveforms are displayed with respect to the pseudo-waveforms displayed in the region 66b. Further, in a region 66d of FIG. 5B, the contributions of specified property values for the MD values between the normal pseudo-waveforms are displayed with respect to the range of which the feature extraction border is set in the region 66b.

In the example of FIG. 5B, the contributions to the MD values for the specified property values in the ranges that correspond to the respective feature extraction borders are displayed in the region 66d to correspond to the setting of three feature extraction borders in the region 66b.

As described above, in analyzing offline, by setting the feature extraction border if necessary, the range of which processes have abnormalities can be made narrow based on the contribution to the feature extraction border. Also, the data device tag of the processes that are the cause of the abnormalities can be made narrow from the contribution for each property value.

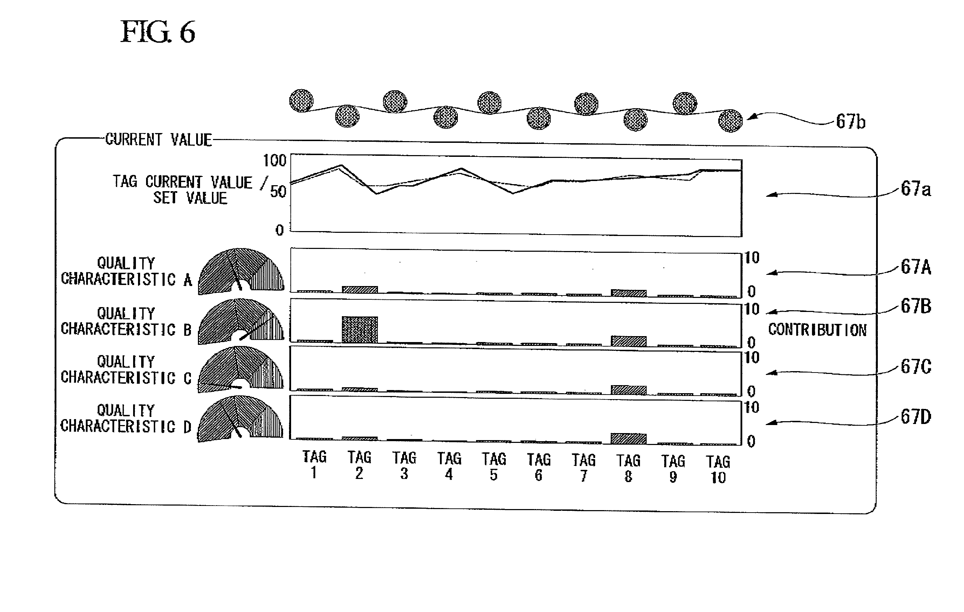

FIG. 6 is a diagram illustrating an example of an analysis screen that is displayed on a monitor screen 6 during the plant operation.

In the display screen of FIG. 6 are installed a region 67a in which the pseudo-waveforms, which are prepared by the waveform display unit 53, are displayed in real time based on the property values for the respective device tags, for example, the process values, a region 67b in which a process schematic diagram for indicating the correspondence relationship between the device tag that corresponds to the horizontal axis of the pseudo-waveform and the process, which is displayed together with the simulated waveform displayed in the region 67a, and regions 67A to 67D in which the contributions to the property values of the device tags for quality characteristics A to D are displayed.

In the region 67a, the property value based on a manipulative value and the property value based on the actual process value are displayed to overlap each other as pseudo-waveforms. The pseudo-waveform during the normal state and the pseudo-waveform prepared in real time may be displayed to overlap each other.

The relationship between the quality characteristics A to D and the contribution to the property values is obtained in advance by the MT method. Also, regarding the device tag displayed on the analysis screen, the operator's burden can be reduced by narrowing the range in which the device tag exerts a great influence on the plant operation, for example, the range in which the contribution is high.

With respect to the pseudo-waveform, the MD value is calculated in real time in the normal state for the quality characteristics A to D. If the MD value exceeds the threshold value, the abnormality is notified. In the example of FIG. 6, the abnormality is detected in the quality characteristic B, and in this case, the operator can take measures such as operation of the tag or the like since the operator can recognize that the main cause of the abnormality is a tag "Tag 2" that corresponds to the property value having high contribution to the quality characteristics B.

As described above, during the analysis online, the plant operator can visually determine the operational state of the plant from the overlapping of pseudo-waveforms during the normal state and the pseudo-waveform prepared in real time. Also, the operator can grasp in a numerical value the estrangement from the normal operational state of the plant and the tendency from the trend of the MD value between the pseudo-waveform during the normal state and the pseudo-waveform prepared in real time. Also, based on the preset threshold value, the operator can grasp the state of the plant. Further, the operator can grasp the cause of the abnormality with reference to the value or change of the contribution for each property value, and perform an appropriate operation.

The operational state analysis system in accordance with preferred embodiments of the present invention can be widely used in analysis for the operation to improve the plant or the analysis during the plant operation. For example, in the case of the operation to improve the plant, the operational situations in the past can be analyzed based on the pseudo-waveforms, the MD values, and the contributions which are obtained using the processed data of historical data stored in the data storage unit 4. Also, by correcting the preparation conditions of the pseudo-waveforms with reference to the pseudo-waveforms, the MD values, and the contributions, an appropriate analytical technique can be searched for. If the condition for obtaining the pseudo-waveforms based on the purpose of analysis or the result of analysis is constructed, it is registered as a new analytical technique and may be stored in the data storage unit 55 of FIG. 1. Also, the analysis for the operation to improve the plant or the result of analysis of the pseudo-waveforms, the MD values, and the contributions obtained by the analysis during the plant operation are appropriately stored in the data storage unit 55.

The analytical technique or the result of analysis stored in the data storage unit 55 is read from the data storage unit 55 at a proper time to be used. For example, the analytical technique that corresponds to the analysis screen as illustrated in FIG. 6 may be registered, and using this, the operational state may be monitored during the plant operation. In this case, the analysis can be performed in real time on the same condition as that such as performing the analysis step. Also, the analysis staff may perform the analysis of the plant operation using the analysis result in the past or may produce a new analytical technique using the analysis result in the past, through proper reference to the analytical technique or the analysis result in the past.

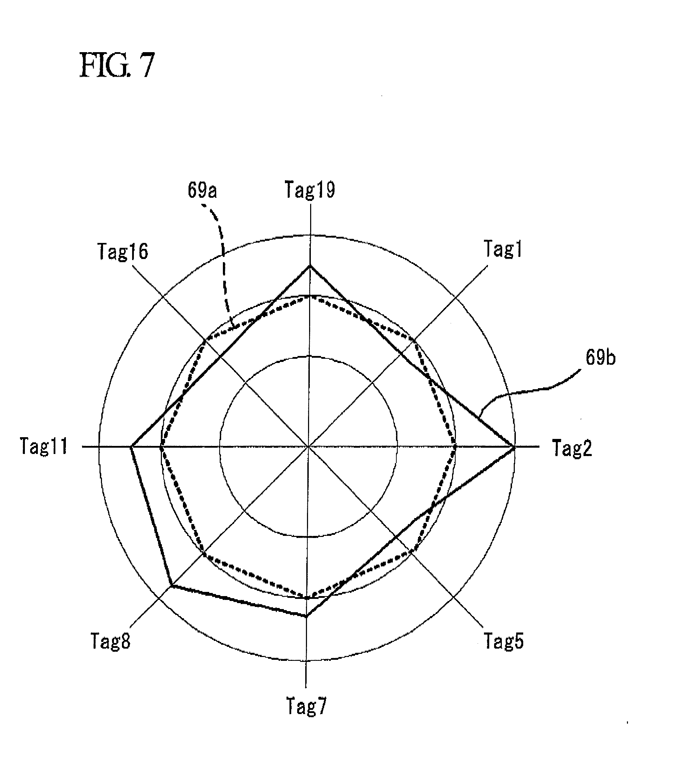

In the above-described preferred embodiments of the present invention, it is exemplified that the pseudo-waveform is a waveform in the form of a broken line graph. However, this is optional. FIG. 7 is a diagram illustrating an example of displaying the pseudo-waveform through a cobweb chart. For example, as illustrated in FIG. 7, the pseudo-waveform may be displayed by a cobweb chart. In an example of FIG. 7, the waveform 69a is displayed as the ideal pseudo-waveform, and the waveform 69b is displayed as the pseudo-waveform to be analyzed.

As described above, by using the operational state analysis system in accordance with preferred embodiments of the present invention, the balance between the processed data items can be visually grasped as a waveform. Also, by making the pseudo-waveform during the normal state and the pseudo-waveform to be analyzed overlap each other, for example, as illustrated in FIG. 3, the difference of whether the waveform to be analyzed is normal or abnormal can be visually grasped.

Also, by preparing in advance the pseudo-waveform that is considered as normal and applying the MT method between the prepared pseudo-waveform and the pseudo-waveform to be analyzed, whether the pseudo-waveform to be analyzed was normal or abnormal can be quantitatively obtained from the obtained MD values. By predetermining the threshold value of the MD value for determining the normality and the abnormality, it becomes possible to make the determination without being affected by human intuition. Which property value difference causes the abnormality can be objectively determined by the value of the contribution that is obtained for each property value.

Also, by preparing in advance the pseudo-waveform that arranges the property values according to the flow of the process and applying the MT method to a set place to be noticed, for example, a "feature extraction border" in one existing process, the process in the abnormal state can be grasped from the MD value, and the property value that is the cause of the abnormality can be grasped from the contribution value.

The application range of the present invention is not limited to the above-described preferred embodiments. The present invention may be widely applied to a filed communication system or the like which transmits/receives process data to/from the field device through wireless communication.

As used herein, the following directional terms "forward, rearward, above, downward, right, left, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. For example, these terms can be construed as including a deviation of at least ± 5 percents of the modified term if this deviation would not negate the meaning of the word it modifies.

The term "unit" is used to describe a component, section or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. An operational state analysis system that analyzes an operational state of a plant based on processed data items related to the plant, the operational state analysis system comprising:
a reception unit that receives a selection of the processed data items, the selection being performed by user of the operational state analysis system;
a property value acquisition unit that acquires a plurality of property values, each of the plurality of property values being one of values of the processed data items and statistical values based on the processed data items of which the selection is received by the reception unit; and
a waveform display unit that displays the plurality of property values acquired by the property value acquisition unit as waveforms that analyzes the operational state.

2. The operational state analysis system according to claim 1, further comprising:
an analysis unit that calculates a difference between the waveform displayed by the waveform display unit as a Mahalanobis' generalized distance.

3. The operational state analysis system according to claim 2, wherein the analysis unit calculates a contribution of one of the plurality of property values for the Mahalanobis' generalized distance.

4. The operational state analysis system according to claim 1, wherein the waveform display unit displays a first waveform that is obtained through the reception unit when the processed data items in a period in which the operational state is normal is given and a second waveform that is obtained through the reception unit when the processed data items in a predetermined period is given in a comparable manner.

5. The operational state analysis system according to claim 1, wherein the reception unit receives the selection of the processed data items based on a user's operation on a display screen on which the waveforms are displayed by the waveform display unit.

6. The operational state analysis system according to claim 1, wherein the processed data items that are given through the reception unit are stored in advance as historical data.

7. The operational state analysis system according to claim 1, wherein the processed data items that are given through the reception unit are current processed data items obtained from the plant.

8. An operational state analysis system comprising:
a field controller that controls field devices disposed in a plant;
a manipulation monitoring device that manipulates and monitors the field controller;
a data storage unit that stores processed data items related to the plant; and
an analysis terminal device that analyzes an operational state of the plant based on the processed data items related to the plant, the analysis terminal device comprising:
a reception unit that receives a selection of the processed data items, the selection being performed by user of the operational state analysis system;
a property value acquisition unit that acquires a plurality of property values, each of the plurality of property values being one of values of the processed data items and statistical values based on the processed data items of which the selection is received by the reception unit; and
a waveform display unit that displays the plurality of property values acquired by the property value acquisition unit as waveforms that analyzes the operational state.

9. An operational state analysis method that analyzes the operational state of a plant based on processed data items, the operational state analysis method comprising:
receiving a selection of the processed data items;
acquiring a plurality of property values that are one of values of the processed data items and statistical values based on the processed data items of which the selection has been received; and
displaying the plurality of property values as waveforms so as to analyze the operational state of the plant.

10. The operational state analysis method according to claim 9, further comprising:
calculating a difference between the waveforms that has been displayed as a Mahalanobis' generalized distance.

11. The operational state analysis method according to claim 10, further comprising:
calculating a contribution of one of the plurality of property values for the Mahalanobis' generalized distance.

12. The operational state analysis method according to claim 9, further comprising:
displaying a first waveform that is obtained when the processed data items in a period in which the operational state is normal is given and a second waveform that is obtained when the processed data items in a predetermined period is given in a comparable manner.

13. The operational state analysis method according to claim 9, further comprising:
receiving the selection of the processed data items based on a user's operation on a display screen on which the waveforms are displayed.

14. The operational state analysis method according to claim 9, wherein the processed data items are stored in advance as historical data.

15. The operational state analysis method according to claim 9, wherein the processed data items are current processed data items obtained from the plant.
